(19)

Europäisches Patentamt
European Patent Office
Office européen des brevets

(11) **EP 4 257 237 A1**

(12) **EUROPEAN PATENT APPLICATION**
published in accordance with Art. 153(4) EPC

(43) Date of publication:
**11.10.2023 Bulletin 2023/41**

(21) Application number: **22895795.7**

(22) Date of filing: **01.08.2022**

(51) International Patent Classification (IPC):
*B01J 23/00* (2006.01)     *B01J 23/02* (2006.01)
*B01J 21/06* (2006.01)     *B01J 23/755* (2006.01)
*B01J 37/02* (2006.01)     *B01J 37/08* (2006.01)
*C01B 3/40* (2006.01)

(52) Cooperative Patent Classification (CPC):
**B01J 21/06; B01J 23/00; B01J 23/02;**
**B01J 23/755; B01J 37/02; B01J 37/08; C01B 3/40;**
**Y02P 20/52**

(86) International application number:
**PCT/KR2022/011327**

(87) International publication number:
**WO 2023/090586 (25.05.2023 Gazette 2023/21)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.11.2021 KR 20210159456**

(71) Applicant: **Lg Chem, Ltd.**
**Seoul 07336 (KR)**

(72) Inventors:
• **CHO, Jun Yeon**
**Daejeon 34122 (KR)**
• **KIM, Sojin**
**Daejeon 34122 (KR)**
• **KIM, Suji**
**Daejeon 34122 (KR)**
• **CHOI, Jun Seon**
**Daejeon 34122 (KR)**
• **KIM, Sangjin**
**Daejeon 34122 (KR)**
• **CHOI, Jae Soon**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHANE-REFORMING CATALYST AND METHOD FOR PRODUCING SAME**

(57)     The catalyst for methane reformation according to an exemplary embodiment of the present application comprises: a porous metal support; a first coating layer provided on the porous metal support and comprising the perovskite-based compound represented by Chemical Formula 1; and a second coating layer provided on the first coating layer and comprising the perovskite-based compound represented by Chemical Formula 2.

[Figure 1]

EP 4 257 237 A1

**Description**

[Technical Field]

This application claims priority to and the benefit of Korean Patent Application No. 10-2021-0159456 filed in the Korean Intellectual Property Office on November 18, 2021, the entire contents of which are incorporated herein by reference.

The present application relates to a catalyst for methane reformation and a method for producing the same.

[Background Art]

As part of activities to reduce greenhouse gases caused by global warming, many studies on carbon dioxide conversion technologies have been conducted. The carbon dioxide reforming reaction, one of the carbon dioxide conversion technologies, is a technology to obtain synthesis gas composed of hydrogen and carbon monoxide by reacting methane and carbon dioxide.

Synthesis gas is a material with high development value from diverse downstream raw materials. As a method for industrially obtaining synthesis gas ($H_2$/CO), the reforming reaction of natural gas may be largely divided into a steam reforming process, a carbon dioxide ($CO_2$) reforming process, a catalytic partial oxidation process, an autothermal reforming process, a tri-reforming process, such as the following Reaction Schemes 1 to 5, and the like.

| [Reaction Scheme 1] | $CH_4 + H_2O - 3H_2 + CO \triangle H = 226$ kJ/mol |

[Reaction Scheme 2]     $CH_4 + CO_2 \rightarrow 2H_2 + 2CO \triangle H = 261$ kJ/mol

[Reaction Scheme 3]     $CH_4 + 0.5O_2 \rightarrow 2H_2 + CO \triangle H = -44$ kJ/mol

[Reaction Scheme 4]     autothermal reforming: Reaction Scheme 1 + Reaction Scheme 3

[Reaction Scheme 5]     tri-reforming: Reaction Scheme 1 + Reaction Scheme 2 + Reaction Scheme 3

Meanwhile, various catalysts may be used for reforming activity in the reforming process. Among them, when noble metal catalysts are used in the reforming process, there is an advantage in that the efficiency of converting natural gas into hydrogen is high, but there is a problem in that the economic feasibility deteriorates because noble metal catalysts are expensive.

Accordingly, nickel catalysts, which have a high hydrogen conversion efficiency and are relatively inexpensive, are usually used in the reforming process. However, in such a case, there is a problem in that the nickel catalyst is deactivated by carbon that is inevitably produced on the surface of the nickel catalyst.

Therefore, there is a need in the art for developing a catalyst which is resistant to carbon deposition and can be effectively applied to the reforming process of methane.

[Detailed Description of the Invention]

[Technical Problem]

The present application has been made in an effort to provide a catalyst for methane reformation and a method for producing the same.

[Technical Solution]

An exemplary embodiment of the present application provides a catalyst for methane reformation, comprising:

a porous metal support;
a first coating layer provided on the porous metal support and comprising a perovskite-based compound represented by the following Chemical Formula 1; and
a second coating layer provided on the first coating layer and comprising a perovskite-based compound represented by the following Chemical Formula 2.

[Chemical Formula 1]        $SrTiO_3$

[Chemical Formula 2]        $Sr_{1-x}A_xTi_\alpha B_yO_{3-\delta}$

In Chemical Formula 2,

A is selected from Y, Sc, La and lanthanide series elements,
B is Ni, Co, Fe, Mn, Cr, Mo, Ru or Rh,
x is a real number of 0 or more and less than 1,
y is a real number of 0 or more and less than 0.3,
$\delta$ is a real number of 0 or more and less than 1,
$\alpha$ is a real number of more than 0.7 and 1 or less, and
(x + y) > 0 is satisfied.

Further, another exemplary embodiment of the present application provides a method for producing a catalyst for methane reformation, the method comprising:

preparing each of a first solution comprising a precursor of the perovskite-based compound represented by Chemical Formula 1; and a second solution comprising a precursor of the perovskite-based compound represented by Chemical Formula 2;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process.

[Advantageous Effects]

The catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming a first coating layer comprising the catalyst component-free perovskite-based compound represented by Chemical Formula 1.

Furthermore, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

In addition, the catalyst for methane reformation according to an exemplary embodiment of the present application can exhibit high activity even at a high space velocity during a reforming reaction of methane because it is possible to increase the active surface area of the catalyst.

[Brief Description of the Drawings]

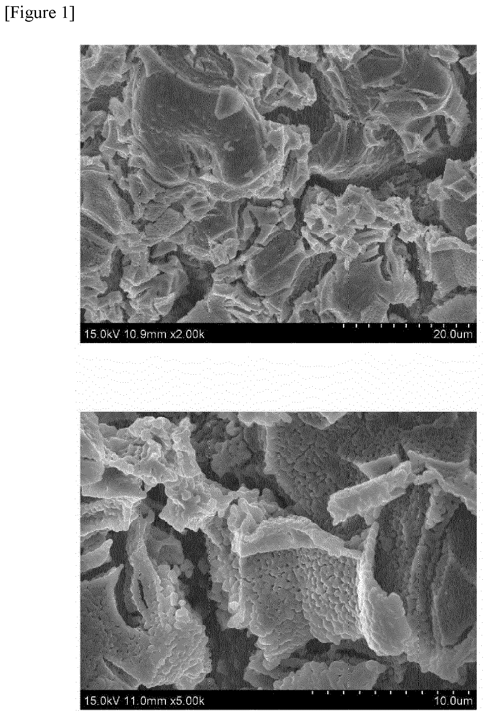

FIG. 1 is a view illustrating a set of electron microscope photographs of the surface of the catalyst for methane reformation according to Example 1 of the present application.

[Best Mode]

Hereinafter, the present specification will be described in more detail.

When one member is disposed "on" another member in the present specification, this comprises not only a case where the one member is brought into contact with another member, but also a case where still another member is present between the two members.

When one part "comprises" one constituent element in the present specification, unless otherwise specifically described, this does not mean that another constituent element is excluded, but means that another constituent element may be further comprised.

Currently, in the case of catalysts which are widely used in the field of reformers, generally, powder-type catalysts and pellet-type support catalysts are usually used. Although the powder-type catalysts may have excellent performance due to excellent dispersion degree of the catalyst, it is difficult to directly use the powder-type catalyst in the industry. For example, when a reformer is driven using the powder-type catalyst, the catalyst comes out together with a material produced after the reaction, and in this case, the catalyst in the form of a powder gradually accumulates in the stream tube at the exit portion, and eventually, a phenomenon of blocking the entire tube may occur. Therefore, there is an disadvantage in that the powder-type catalysts cannot be used in the commercial reformers used in the industry.

In addition, the pellet-type support catalyst is currently frequently used in industrial reformers. Due to the limitation of the mass transfer rate, the performance deteriorates compared to the powder-type catalyst only in terms of the catalyst performance, but there is an advantage in that the pellet-type support catalyst can be used for a long period of time because a support is used. However, a $\gamma$-$Al_2O_3$ pellet, which is often used as the pellet-type support catalyst, has a weak structural strength, and thus may be easily broken, and accordingly, there is a disadvantage in that a differential pressure in the reactor is generated. Furthermore, since the volume is large due to the characteristics of the pellet-type support catalyst, the volume thereof becomes considerably large when the pellet-type support catalyst is used in a high-capacity reformer. Further, all reforming reactions are sensitive to reaction temperature, but the existing pellet-type catalyst has a disadvantage in that heat is not evenly distributed throughout the reactor due to a large reduction in thermal conductivity. In addition, since the reforming reaction is very fast, in the case of a pellet-type support or an extruded catalyst, the effectiveness factor of the catalyst is 0.3 or less, so that there is a disadvantage in that the utilization of the catalyst deteriorates.

Thus, the present application intended to alleviate a phenomenon of blocking the stream tube, which is a disadvantage of the powder-type, and improve the heat and mass transfer rates which are a common disadvantage of the powder-type and the pellet-type, through a method of coating a porous metal support having high heat and mass transfer rates with a catalyst. Further, the present application intends to provide a catalyst for methane reformation capable of supporting a large amount of catalyst at one time and suppressing side reactions caused by a binder.

The catalyst for methane reformation according to an exemplary embodiment of the present application comprises: a porous metal support; a first coating layer provided on the porous metal support and comprising the perovskite-based compound represented by Chemical Formula 1; and a second coating layer provided on the first coating layer and comprising the perovskite-based compound represented by Chemical Formula 2.

In an exemplary embodiment of the present application, the perovskite-based compound represented by Chemical Formula 1 is a catalyst component-free compound, the perovskite-based compound represented by Chemical Formula 2 is a compound comprising a catalyst component (A and/or B of Chemical Formula 2), and these are different from each other.

In an exemplary embodiment of the present application, Chemical Formula 2 may be represented by the following Chemical Formula 3 or 4.

$$[\text{Chemical Formula 3}] \qquad SrTi_\alpha B_y O_{3-\delta}$$

$$[\text{Chemical Formula 4}] \qquad Sr_{1-x}Y_x Ti_\alpha B_y O_{3-\delta}$$

In Chemical Formulae 3 and 4,

B is Ni or Ru,
x is a real number of more than 0 and less than 1,
y is a real number of more than 0 and less than 0.3, and
$\delta$ is a real number of more than 0 and less than 1, and
$\alpha$ is a real number of more than 0.7 and 1 or less.

In an exemplary embodiment of the present application, the porous metal support may be composed of a material capable of maintaining thermal stability at a high temperature of 800°C or more.

In an exemplary embodiment of the present application, the porous metal support may be a metal foam comprising NiFeCrAl, NiCrAl, SiC or $\alpha$-$Al_2O_3$.

The porous metal support is a support having various shapes, has a small heat capacity and an excellent heat transfer ability, and thus may be molded into a desired shape for use. The form, size and the like of the porous metal support are not particularly limited, and the porous metal support may have a porosity of 10% to 99%, 50% to 96%, and 85% to 96%. The porous metal support may have an average pore size (cell size) of 400 $\mu$m to 2,000 $\mu$m, and 450 $\mu$m to 1,500 $\mu$m. When the porous metal support has an average pore size of less than 400 $\mu$m, it may be difficult to coat the porous metal support with a precursor solution, and when the porous metal support has an average pore size of more than 2,000 $\mu$m, the surface area on which the catalyst can be coated is reduced, so that the average pore size range is not preferred because the range may be disadvantageous in the process. The porous metal support may be appropriately produced by those skilled in the art using methods known in the art, in consideration of the material, pore size, porosity, and the like of the porous metal support. According to an exemplary embodiment of the present application, a porous metal support having various materials, pore sizes, and the like may be applied as in Examples to be described below.

In an exemplary embodiment of the present application, a content of the perovskite-based compound represented by Chemical Formula 1 may be 1 wt% to 20 wt%, and 1.5 wt% to 18 wt% based on the total weight of the porous metal support. When the content of the perovskite-based compound represented by Chemical Formula 1 exceeds 20 wt%, the remaining capacity capable of coating the perovskite-based compound represented by Chemical Formula 2 may be reduced, and accordingly, the aforementioned weight range is not preferred because the activity of the catalyst may be reduced compared to the volume of the porous metal support. Furthermore, when the content of the perovskite-based compound represented by Chemical Formula 1 is less than 1 wt%, it may be difficult to obtain the effect caused by the first coating layer because the content is so small.

In an exemplary embodiment of the present application, the weight ratio of the perovskite-based compound represented by Chemical Formula 1 : the perovskite-based compound represented by Chemical Formula 2 may be 1 : 1 to 1 : 20, and 1 : 1.1 to 1 : 15. The case where the weight ratio of the perovskite-based compound represented by Chemical Formula 1 : the perovskite-based compound represented by Chemical Formula 2 is out of the range is not preferred because the activity of the catalyst may be reduced compared to the volume of the porous metal support.

In an exemplary embodiment of the present application, the (a + y) of Chemical Formula 2 may be 1. Further, in an exemplary embodiment of the present application, the (a + y) of Chemical Formula 2 may be a real number of more than 0.90 and less than 1. In Chemical Formula 2, B such as Ni substitutes a part of Ti, and the theoretical stoichiometric ratio of (a + y) is 1, but when the content of Ti is slightly less than the theoretical stoichiometric ratio during the preparation of the perovskite-based compound represented by Chemical Formula 2, Ti in Chemical Formula 2 may be more easily substituted with B such as Ni.

In an exemplary embodiment of the present application, a content of the perovskite-based compound represented by Chemical Formula 2 may be 3 wt% to 40 wt%, 6 wt% to 35 wt%, and 7 wt% to 30 wt%, based on a total weight of the catalyst for methane reformation. When the content of the perovskite-based compound represented by Chemical Formula 2 is less than 3 wt% based on the total weight of the catalyst for methane reformation, the reactivity may be lowered due to relatively few active sites on the catalyst surface, so the content is not preferred. In addition, when the content of the perovskite-based compound represented by Chemical Formula 2 exceeds 40 wt%, a relatively large amount of the catalyst component is contained compared to the porous metal support, making it difficult to maintain the pore structure, it may not be easy to bond the catalyst component to the porous metal support, and accordingly, the practical benefits of the methane reforming reaction may be reduced.

In an exemplary embodiment of the present application, the first coating layer may be provided on the entire surface on the porous metal support.

In an exemplary embodiment of the present application, at least a portion of the surface of the catalyst for methane reformation may comprise protrusion shapes. The protrusion shape may be spherical, elliptical, or a combination thereof, but is not limited thereto.

In an exemplary embodiment of the present application, the first coating layer comprising the perovskite-based compound represented by Chemical Formula 1 may serve to fix the second coating layer comprising the perovskite-based compound represented by Chemical Formula 2 on the porous metal support. Furthermore, the second coating layer comprising the perovskite-based compound represented by Chemical Formula 2 may be present in the form of protrusions on the first coating layer, and accordingly, the performance of the methane reforming reaction may be improved by increasing the reaction surface area of the catalyst.

Further, according to an exemplary embodiment of the present application, by simultaneously applying the first coating layer comprising the perovskite-based compound represented by Chemical Formula 1; and the second coating layer comprising the perovskite-based compound represented by Chemical Formula 2, the total content of catalyst supported on the porous metal support may be increased compared to when catalyst particles are applied alone. In addition, according to an exemplary embodiment of the present application, the durability and performance of the catalyst may be improved because it is possible to prevent a phenomenon in which a metal (Ni, Cr, and the like) that is the main component of the porous metal support is exposed to the surface in the form of a metal oxide (NiO, $Cr_2O_3$, and the like) under long-term operation conditions at high temperature (750°C or higher) and prevent the changes in component proportion or phase of the catalyst of Chemical Formula 2 by applying the first coating layer comprising the perovskite-based compound represented by Chemical Formula 1.

In an exemplary embodiment of the present application, the catalyst for methane reformation may be applied to a steam reforming process, a carbon dioxide ($CO_2$) reforming process, a catalytic partial oxidation process, an autothermal reforming process, a tri-reforming process or a mixed reforming process, and the methane reforming process is not particularly limited.

The method for producing a catalyst for methane reformation according to an exemplary embodiment of the present application comprises: preparing each of a first solution comprising a precursor of the perovskite-based compound represented by Chemical Formula 1; and a second solution comprising a precursor of the perovskite-based compound represented by Chemical Formula 2; producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process.

In the method for producing a catalyst for methane reformation according to an exemplary embodiment of the present application, details on the porous metal support, the perovskite-based compound represented by Chemical Formula 1, the perovskite-based compound represented by Chemical Formula 2, and the like are the same as those as described above.

In particular, the first solution comprising the precursor of the perovskite-based compound represented by Chemical Formula 1 and the second solution comprising the precursor of the perovskite-based compound represented by Chemical Formula 2 may be each applied in the form of a sol or gel.

The precursor of the perovskite-based compound is a precursor of the metal constituting the perovskite-based compound, and the metal molar ratio of the perovskite-based compound may be adjusted by adjusting the content thereof. In addition, the precursor of the metal is not particularly limited, and ammonium salts, nitrates, carbonates, chlorides, lactates, hydroxides, organic acid salts, oxides of the metal elements, or mixtures thereof may be applied in combination.

The method for producing a catalyst for methane reformation according to an exemplary embodiment of the present application comprises preparing each of a first solution comprising a precursor of the perovskite-based compound represented by Chemical Formula 1; and a second solution comprising a precursor of the perovskite-based compound represented by Chemical Formula 2.

The first solution and the second solution may each independently further comprise a solvent, and as the solvent, a solvent known in the art may be applied, and is not particularly limited thereto.

The method for producing a catalyst for methane reformation according to an exemplary embodiment of the present application comprises: producing a catalyst precursor provided with a first coating layer by coating a porous metal support with the first solution, and then performing a first heat treatment process; and producing a catalyst provided with a second coating layer by coating the catalyst precursor provided with the first coating layer with the second solution, and then performing a second heat treatment process.

As the coating method of the first solution and the second solution, methods known in the art may be used, and dip-coating, wash-coating and the like may be used, but the method is not limited thereto.

The first heat treatment process and the second heat treatment process may each independently comprise performing drying and firing. The drying may be performed at a temperature of 50°C to 150°C for 1 hour to 48 hours, and may be performed at a temperature of 60°C to 100°C for 5 hours to 36 hours, but is not limited thereto. Further, the firing may be performed at a temperature of 350°C to 1 100°C for 1 hour to 10 hours in an air atmosphere, and may be performed at a temperature of 500°C to 1,000°C for 1.5 hours to 8 hours in an air atmosphere, but is not limited thereto. When the firing is performed at a temperature less than 350°C, the perovskite phase may not be properly formed, and when the firing is performed at a temperature more than 1,100°C, the durability of the porous metal support may deteriorate, so that the temperature is not preferred.

In an exemplary embodiment of the present application, the method may further comprise measuring the weight of the catalyst supported on the porous metal support after the second heat treatment process. In addition, by measuring the weight of the catalyst supported on the porous metal support, the coating of the catalyst precursor provided with the first coating layer with the above-described second solution, and then the performing of the second heat treatment process may be performed repeatedly once to 10 times until a desired amount of catalyst is supported on the porous metal support.

The catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming a first coating layer comprising the catalyst component-free perovskite-based compound represented by the following Chemical Formula 1.

Furthermore, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

In addition, the catalyst for methane reformation according to an exemplary embodiment of the present application can exhibit high activity even at a high space velocity during a reforming reaction of methane because it is possible to increase the active surface area of the catalyst.

[Mode for Invention]

Hereinafter, the present application will be described in detail with reference to Examples for specifically describing the present application. However, the Examples according to the present application may be modified in various forms, and it is not interpreted that the scope of the present application is limited to the Examples described in detail below. The Examples of the present application are provided for more completely explaining the present application to the person with ordinary skill in the art.

**<Examples>**

**<Example 1>**

1) Preparation of first solution comprising precursor of perovskite-based compound (SrTi03)

A perovskite compound component solution was prepared by the citrate method. Strontium nitrate $(Sr(NO_3)_3H_2O)$ was dissolved in distilled water together with critic acid and ethylene glycol. After titanium isopropoxide $(Ti(OCH(CH_3)_2)_4)$ was dissolved in ethanol, the two solutions were mixed at 70°C. Thereafter, after the mixture was stirred for 3 hours, the mixture was cooled to room temperature and stored. In this case, the concentration of the solution was 0.1 M.

2) Preparation of second solution comprising precursor of perovskite-based compound $(SrTi_{0.97}Ni_{0.03}O_{3-\delta}, 0 < \delta < 1)$ represented by Chemical Formula 2

A process was performed in the same manner as in 1) above, except that nickel nitrate $(Ni(NO_3)_2)$ was added and used in an amount of 3 mol% relative to titanium based on the metal.

3) Production of catalyst for methane reformation

A porous metal support (NiCrAl, average pore size: 1,200 $\mu$m) was dip-coated with the first solution (formation of a first coating layer), and then dried at 70°C for 24 hours, and heat-treated at 300°C to 900°C in an air atmosphere for 3 hours.
Thereafter, the porous metal support in which the first coating layer was formed was dip-coated with the second solution (formation of a second coating layer), and then dried at 70°C for 24 hours, and heat-treated at 300°C to 900°C in an air atmosphere for 3 hours. The dip coating, drying and heat treatment of the second solution was repeated several times to finally produce a catalyst in which a first coating layer (SrTiCE) and a second coating layer $(SrTi_{0.97}Ni_{0.03}O_{3-\delta}, 0 < \delta < 1)$ were provided on a porous metal support. Based on the total weight of the catalyst for methane reformation, the content of the perovskite-based compound (SrTi03) was 7 wt%, and the content of the perovskite-based compound $(SrTi_{0.97}Ni_{0.03}O_{3-\delta}, 0 < \delta < 1)$ represented by Chemical Formula 2 was 20 wt%.
A set of electron microscope photographs of the surface of the catalyst for methane reformation according to Example 1 of the present application is illustrated in the following FIG. 1.
The content of the perovskite-based compound represented by Chemical Formula 1 or 2 may be calculated by the following Equation 1.

[Equation 1]

Content (wt%) of perovskite-based compound represented by Chemical Formula 1

or 2 = (total weight of catalyst - weight of porous metal support) / (total weight of catalyst) ×

100

**<Example 2>**

A process was performed in the same manner as in Example 1, except that yttrium nitrate $(Y(NO_3)_2)$ was added in an amount of 12 mol% relative to strontium based on the metal during the preparation of the second solution and nickel nitrate $(Ni(NO_3)_2)$ was added such that the molar ratio of titanium : nickel became 0.80 : 0.15.

**<Example 3>**

A process was performed in the same manner as in Example 1, except that yttrium nitrate (Y(NO$_3$)$_2$) was added in an amount of 12 mol% relative to strontium based on the metal during the preparation of the second solution and nickel nitrate (Ni(NO$_3$)$_2$) was added such that the molar ratio of titanium : nickel became 0.80 : 0.20.

**<Example 4>**

A process was performed in the same manner as in Example 1, except that ruthenium chloride (RuCl$_3$) was added and used in an amount of 5 mol% relative to titanium based on the metal instead of nickel nitrate (Ni(NO$_3$)$_2$) during the preparation of the second solution.

**<Example 5>**

A process was performed in the same manner as in Example 1, except that yttrium nitrate (Y(NO$_3$)$_2$) was added in an amount of 8 mol% relative to strontium based on the metal during the preparation of the second solution and ruthenium chloride (RuCl$_3$) was added such that the molar ratio of titanium : ruthenium became 0.80 : 0.15.

**<Example 6>**

A process was performed in the same manner as in Example 3, except that the content of the perovskite-based compound (SrTi03) was adjusted so as to be 1.7 wt% based on the total weight of the catalyst for methane reformation.

**<Example 7>**

A process was performed in the same manner as in Example 3, except that the content of the perovskite-based compound (SrTi03) was adjusted so as to be 13 wt% based on the total weight of the catalyst for methane reformation.

**<Example 8>**

A process was performed in the same manner as in Example 3, except that the content of the perovskite-based compound (SrTi03) was adjusted so as to be 17 wt% based on the total weight of the catalyst for methane reformation.

**<Example 9>**

A process was performed in the same manner as in Example 3, except that as the porous metal support, NiFeCrAl (average pore size: 1,200 $\mu$m) was applied instead of NiCrAl.

**<Example 10>**

A process was performed in the same manner as in Example 3, except that as the porous metal support, NiCrAl_800 (average pore size: 800 $\mu$m) was applied instead of NiCrAl.

**<Example 11>**

A process was performed in the same manner as in Example 3, except that as the porous metal support, NiCrAl_1500 (average pore size: 1,500 $\mu$m) was applied instead of NiCrAl.

**<Comparative Example 1>**

A porous metal support (NiCrAl, average pore size: 1,200 $\mu$m) alone was used as Comparative Example 1.

**<Comparative Example 2>**

A process was performed in the same manner as in Example 1, except that the coating of the porous metal support with the first solution alone was applied without the coating of the catalyst precursor with the second solution.

**<Comparative Example 3>**

A process was performed in the same manner as in Example 1, except that the coating of the catalyst precursor with the second solution alone was applied without the coating of the porous metal support with the first solution.

**<Comparative Example 4>**

A process was performed in the same manner as in Example 3, except that the coating of the catalyst precursor with the second solution alone was applied without the coating of the porous metal support with the first solution.

The configurations of the porous metal supports, the first coating layer and the second coating layer in the Examples and Comparative Examples are shown in the following Table 1.

[Table 1]

| | Porous metal support | First coating layer | Second coating layer |
|---|---|---|---|
| Example 1 | NiCrAl | $SrTiO_3$ | $SrTi_{0.97}Ni_{0.03}O_{3-\delta}$ |
| Example 2 | NiCrAl | $SrTiO_3$ | $Sr_{0.88}Y_{0.12}Ti_{0.80}Ni_{0.15}O_{3-\delta}$ |
| Example 3 | NiCrAl | $SrTiO_3$ | $Sr_{0.88}Y_{0.12}Ti_{0.80}Ni_{0.20}O_{3-\delta}$ |
| Example 4 | NiCrAl | $SrTiO_3$ | $SrTi_{0.95}Ru_{0.05}O_{3-\delta}$ |
| Example 5 | NiCrAl | $SrTiO_3$ | $Sr_{0.92}Y_{0.08}Ti_{0.80}Ru_{0.15}O_{3-\delta}$ |
| Example 6 | NiCrAl | $SrTiO_3$ | $Sr_{0.88}Y_{0.12}Ti_{0.80}Ni_{0.20}O_{3-\delta}$ |
| Example 7 | NiCrAl | $SrTiO_3$ | $Sr_{0.88}Y_{0.12}Ti_{0.80}Ni_{0.20}O_{3-\delta}$ |
| Example 8 | NiCrAl | $SrTiO_3$ | $Sr_{0.88}Y_{0.12}Ti_{0.80}Ni_{0.20}O_{3-\delta}$ |
| Example 9 | NiFeCrAl | $SrTiO_3$ | $Sr_{0.88}Y_{0.12}Ti_{0.80}Ni_{0.20}O_{3-\delta}$ |
| Example 10 | NiCrAl_800 | $SrTiO_3$ | $Sr_{0.88}Y_{0.12}Ti_{0.80}Ni_{0.20}O_{3-\delta}$ |
| Example 11 | NiCrAl_1500 | $SrTiO_3$ | $Sr_{0.88}Y_{0.12}Ti_{0.80}Ni_{0.20}O_{3-\delta}$ |
| Comparative Example 1 | NiCrAl | - | - |
| Comparative Example 2 | NiCrAl | $SrTiO_3$ | - |
| Comparative Example 3 | NiCrAl | - | $SrTi_{0.97}Ni_{0.03}O_{3-\delta}$ |
| Comparative Example 4 | NiCrAl | - | $Sr_{0.88}Y_{0.12}Ti_{0.80}Ni_{0.20}O_{3-\delta}$ |

**<Experimental Example 1> Evaluation of dry reforming reaction of methane**

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% $H_2/N_2$ conditions for 1 hour to 2 hours, a catalytic reaction was performed for 100 hours. In order to more clearly compare the difference in activity between the catalysts, the activity characteristics of the catalysts were evaluated at severe space velocities.

Gas composition: CH4 : $CO_2$: $N_2$ = 1 : 1.2 : 0.96
Flow rate: gas hour space velocity (GHSV) = 2,500 hr$^{-1}$ (based on $CH_4$)
Reaction temperature: 750°C
Reaction pressure: 1 bar

A reaction conversion rate after 100 hours of reaction was calculated by analyzing the composition of the produced gas using gas chromatography (GC), and is shown in the following Table 2.

$$\text{Conversion rate } (Xi, \%) = [(Fi_{in} - Fi_{out}) / Fi_{in}] \times 100 \ (Fi = \text{flow rate of } i)$$

**<GC analysis conditions>**

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

[Table 2]

| Catalyst type | GHSV(hr$^{-1}$) | $CH_4$ conversion rate (%) | $CO_2$ conversion rate (%) | $H_2$/CO |
|---|---|---|---|---|
| Example 1 | 2,500 | 44 | 52 | 0.76 |
| Example 2 | 2,500 | 58 | 65 | 0.76 |
| Example 3 | 2,500 | 60 | 69 | 0.76 |
| Example 4 | 2,500 | 61 | 65 | 0.78 |
| Example 5 | 2,500 | 61 | 64 | 0.78 |
| Example 6 | 2,500 | 57 | 62 | 0.75 |
| Example 7 | 2,500 | 62 | 70 | 0.78 |
| Example 8 | 2,500 | 58 | 64 | 0.75 |
| Comparative Example 1 | 2,500 | 18 | 20 | 0.54 |
| Comparative Example 2 | 2,500 | 3 | 4 | 0.20 |
| Comparative Example 3 | 2,500 | 42 | 50 | 0.73 |
| Comparative Example 4 | 2,500 | 50 | 58 | 0.72 |

As in the results of Table 2, it can be confirmed that when Example 1 and Comparative Example 3 are compared to each other or Example 3 and Comparative Example 4 are compared to each other, the catalyst for methane reformation according to the present invention, which comprises the porous metal support, the first coating layer comprising the perovskite-based compound represented by Chemical Formula 1, and the second coating layer comprising the perovskite-based compound represented by Chemical Formula 2 has excellent $CH_4$ conversion rate and $CO_2$ conversion rate, compared to Comparative Examples 3 and 4 to which the first coating layer is not applied.

**<Experimental Example 2> Evaluation of dry reforming reaction of methane**

A fixed-bed reactor system was introduced to carry out a dry reforming reaction of methane. A Quartz tube reactor (inner diameter = 1/2 inch, length = 50 cm) was used and packed with each catalyst (about 2g) of the Examples and the Comparative Examples. First, after the catalyst underwent a reduction process at 800°C under 10% $H_2$/$N_2$ conditions for 1 hour to 2 hours, a catalytic reaction was performed for 100 hours. In order to more clearly compare the difference in activity between the catalysts, the activity characteristics of the catalysts were evaluated at severe space velocities.

Gas composition: CH4 : $CO_2$: $N_2$ = 1 : 1.2 : 0.96
Flow rate: gas hour space velocity (GHSV) = 1,500 hr$^{-1}$ (based on $CH_4$)
Reaction temperature: 800°C
Reaction pressure: 1 bar

A reaction conversion rate after 100 hours of reaction was calculated by analyzing the composition of the produced gas using gas chromatography (GC), and is shown in the following Table 3.

$$\text{Conversion rate } (Xi, \%) = [(Fi_{in} - Fi_{out}) / Fi_{in}] \times 100 \ (Fi = \text{flow rate of } i)$$

**<GC analysis conditions>**

1) GC model: Agilent 6890
2) Oven temp.: 40°C/7 min-90°C/5 min-180°C/6 min
3) Detector: TCD, 250°C
4) Sample: 0.25 mL
5) Valve box Temp.: 150°C

[Table 3]

| Catalyst type | GHSV(hr$^{-1}$) | CH$_4$ conversion rate (%) | CO$_2$ conversion rate (%) | H$_2$/CO |
|---|---|---|---|---|
| Example 3 | 1,500 | 91 | 89 | 0.84 |
| Example 5 | 1,500 | 91 | 90 | 0.85 |
| Example 9 | 1,500 | 90 | 88 | 0.84 |
| Example 10 | 1,500 | 92 | 91 | 0.85 |
| Example 11 | 1,500 | 88 | 87 | 0.84 |
| Comparative Example 4 | 1,500 | 89 | 88 | 0.82 |

As in the results of Table 3, it can be confirmed that when Example 3 and Comparative Example 4 are compared to each other, the catalyst for methane reformation according to the present invention, which comprises the porous metal support, a first coating layer comprising the perovskite-based compound represented by Chemical Formula 1, and a second coating layer comprising the perovskite-based compound represented by Chemical Formula 2 has excellent CH$_4$ conversion rate and CO$_2$ conversion rate compared to Comparative Example 4 to which the first coating layer is not applied.

As in the above results, it can be confirmed that in the Examples of the present application, the ratio of H$_2$/CO can be improved compared to the Comparative Examples. Accordingly, it can be confirmed that side reactions caused by the porous metal support are reduced in the Examples of the present application.

Therefore, the catalyst for methane reformation according to an exemplary embodiment of the present application can not only improve adhesion between a porous metal support and a second coating layer comprising a perovskite-based compound represented by Chemical Formula 2, but can also prevent side reactions of the porous metal support by forming a first coating layer comprising the catalyst component-free perovskite-based compound represented by the following Chemical Formula 1.

Furthermore, the catalyst for methane reformation according to an exemplary embodiment of the present application is characterized in that reaction heat is easily controlled compared to pellet-type or powder-type catalysts in the related art because a perovskite-based compound is supported on a porous metal support having high thermal conductivity.

In addition, the catalyst for methane reformation according to an exemplary embodiment of the present application can exhibit high activity even at a high space velocity during a reforming reaction of methane because it is possible to increase the active surface area of the catalyst.

**Claims**

1. A catalyst for methane reformation, comprising:

   a porous metal support;
   a first coating layer provided on the porous metal support and comprising a perovskite-based compound represented by the following Chemical Formula 1; and
   a second coating layer provided on the first coating layer and comprising a perovskite-based compound represented by the following Chemical Formula 2:

[Chemical Formula 1]     $SrTiO_3$

[Chemical Formula 2]     $Sr_{1-x}A_xTi_\alpha B_yO_{3-\delta}$

wherein, in Chemical Formula 2,
A is selected from Y, Sc, La and lanthanide series elements,
B is Ni, Co, Fe, Mn, Cr, Mo, Ru or Rh,
x is a real number of 0 or more and less than 1,
y is a real number of 0 or more and less than 0.3,
$\delta$ is a real number of 0 or more and less than 1,
$\alpha$ is a real number of more than 0.7 and 1 or less, and
$(x + y) > 0$ is satisfied.

2. The catalyst of claim 1, wherein Chemical Formula 2 is represented by the following Chemical Formula 3 or 4:

[Chemical Formula 3]     $SrTi_\alpha B_yO_{3-\delta}$

[Chemical Formula 4]     $Sr_{1-x}Y_xTi_\alpha B_yO_{3-\delta}$

in Chemical Formulae 3 and 4,
B is Ni or Ru,
x is a real number of more than 0 and less than 1,
y is a real number of more than 0 and less than 0.3, and
$\delta$ is a real number of more than 0 and less than 1, and
$\alpha$ is a real number of more than 0.7 and 1 or less.

3. The catalyst of claim 1, wherein the porous metal support is a metal foam comprising NiFeCrAl, NiCrAl, SiC or $\alpha$-$Al_2O_3$.

4. The catalyst of claim 1, wherein a content of the perovskite-based compound represented by Chemical Formula 2 is 3 wt% to 40 wt% based on a total weight of the catalyst for methane reformation.

5. The catalyst of claim 1, wherein the catalyst for methane reformation is applied to a steam reforming process, a carbon dioxide ($CO_2$) reforming process, a catalytic partial oxidation process, an autothermal reforming process, a tri-reforming process or a mixed reforming process.

6. A method for producing a catalyst for methane reformation, the method comprising:

preparing each of a first solution comprising a precursor of a perovskite-based compound represented by the following Chemical Formula 1; and a second solution comprising a precursor of a perovskite-based compound represented by the following Chemical Formula 2;
producing a catalyst precursor provided with a first coating layer by coating a porous metal support with the first solution, and then performing a first heat treatment process; and
producing a catalyst provided with a second coating layer by coating the catalyst precursor provided with the first coating layer with the second solution, and then performing a second heat treatment process:

[Chemical Formula 1]     $SrTiO_3$

[Chemical Formula 2]     $Sr_{1-x}A_xTi_\alpha B_yO_{3-\delta}$

wherein, in Chemical Formula 2,
A is selected from Y, Sc, La and lanthanide series elements,
B is Ni, Co, Fe, Mn, Cr, Mo, Ru or Rh,
x is a real number of 0 or more and less than 1,
y is a real number of 0 or more and less than 0.3,
$\delta$ is a real number of 0 or more and less than 1,
$\alpha$ is a real number of more than 0.7 and 1 or less, and

(x + y) > 0 is satisfied.

7. The method of claim 6, wherein Chemical Formula 2 is represented by the following Chemical Formula 3 or 4:

[Chemical Formula 3] $SrTi_{\alpha}B_yO_{3-\delta}$

[Chemical Formula 4] $Sr_{1-x}Y_xTi_{\alpha}B_yO_{3-\delta}$

in Chemical Formulae 3 and 4,
B is Ni or Ru,
x is a real number of more than 0 and less than 1,
y is a real number of more than 0 and less than 0.3, and
$\delta$ is a real number of more than 0 and less than 1, and
$\alpha$ is a real number of more than 0.7 and 1 or less.

8. The method of claim 6, wherein the porous metal support is a metal foam comprising NiFeCrAl, NiCrAl, SiC or $\alpha$-$Al_2O_3$.

[Figure 1]

## INTERNATIONAL SEARCH REPORT

| International application No. |
|---|
| **PCT/KR2022/011327** |

### A. CLASSIFICATION OF SUBJECT MATTER

**B01J 23/00**(2006.01)i; **B01J 23/02**(2006.01)i; **B01J 21/06**(2006.01)i; **B01J 23/755**(2006.01)i; **B01J 37/02**(2006.01)i; **B01J 37/08**(2006.01)i; **C01B 3/40**(2006.01)i

According to International Patent Classification (IPC) or to both national classification and IPC

### B. FIELDS SEARCHED

Minimum documentation searched (classification system followed by classification symbols)

B01J 23/00(2006.01); B01J 21/06(2006.01); B01J 21/08(2006.01); B01J 23/30(2006.01); B01J 23/63(2006.01); B01J 23/652(2006.01); B01J 35/04(2006.01); B01J 35/10(2006.01); B01J 37/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 금속 지지체(porous metal support), 페로브스카이트(perovskite), 코팅층(coating layer), 촉매(catalyst), 스트론튬(strontium, Sr), 메탄 개질(methane reforming)

### C. DOCUMENTS CONSIDERED TO BE RELEVANT

| Category* | Citation of document, with indication, where appropriate, of the relevant passages | Relevant to claim No. |
|---|---|---|
| A | KR 10-2018-0136701 A (KOREA INSTITUTE OF SCIENCE AND TECHNOLOGY) 26 December 2018 (2018-12-26)<br>See abstract; paragraphs [0044] and [0072]-[0074]; claim 1; and figure 1. | 1-8 |
| A | KR 10-2002-0080387 A (BATTELLE MEMORIAL INSTITUTE) 23 October 2002 (2002-10-23)<br>See abstract; page 4; and claims 1, 9 and 10. | 1-8 |
| A | US 2020-0238256 A1 (LUMMUS TECHNOLOGY LLC) 30 July 2020 (2020-07-30)<br>See abstract; paragraphs [0148]-[0152], [0155] and [0156]; and claim 1. | 1-8 |
| A | KR 10-2018-0127267 A (INDUSTRY FOUNDATION OF CHONNAM NATIONAL UNIVERSITY) 28 November 2018 (2018-11-28)<br>See abstract; and claims 1-7. | 1-8 |
| A | US 2009-0286677 A1 (TAKESHIMA, S. et al.) 19 November 2009 (2009-11-19)<br>See abstract; and claims 1-7. | 1-8 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/011327** |

**C.    DOCUMENTS CONSIDERED TO BE RELEVANT**

| Category* | Citation of document, with indication, where appropriate, of the relevant passages | Relevant to claim No. |
|---|---|---|
| A | CN 107930626 B (SHANGHAI LANKE PETROCHEMICAL ENGINEERING & TECH. CO., LTD.) 23 April 2021 (2021-04-23)<br>    See abstract; and claims 1-8. | 1-8 |

Form PCT/ISA/210 (second sheet) (July 2022)

<table>
<tr><td colspan="2" align="center">INTERNATIONAL SEARCH REPORT<br/>Information on patent family members</td><td colspan="2">International application No.<br/><br/>**PCT/KR2022/011327**</td></tr>
</table>

| Patent document cited in search report | Publication date (day/month/year) | Patent family member(s) | Publication date (day/month/year) |
|---|---|---|---|
| KR    10-2018-0136701    A | 26 December 2018 | KR          10-2015299       B1 | 28 August 2019 |
| KR    10-2002-0080387    A | 23 October 2002 | AT          303866          T | 15 September 2005 |
| | | AU    2005-200598    A1 | 10 March 2005 |
| | | AU    2005-200598    B2 | 20 December 2007 |
| | | AU          3466601       A | 07 August 2001 |
| | | AU          778052       B2 | 11 November 2004 |
| | | AU          778052       C | 01 September 2005 |
| | | CA          2338815       A1 | 10 February 2000 |
| | | CA          2338815       C | 18 December 2007 |
| | | CA          2396144       A1 | 02 August 2001 |
| | | CA          2396144       C | 19 November 2013 |
| | | CN          1211162       C | 20 July 2005 |
| | | CN          1400923       A | 05 March 2003 |
| | | DE          69927162       T2 | 08 June 2006 |
| | | DK          1100618       T3 | 09 January 2006 |
| | | EP          1100618       A1 | 23 May 2001 |
| | | EP          1100618       B1 | 07 September 2005 |
| | | EP          1257362       A1 | 20 November 2002 |
| | | EP          1257362       B1 | 08 May 2013 |
| | | EP          2295140       A1 | 16 March 2011 |
| | | HK          1053996       A1 | 14 November 2003 |
| | | JP    2003-512143    A | 02 April 2003 |
| | | JP    2003-520675    A | 08 July 2003 |
| | | JP    2012-110894    A | 14 June 2012 |
| | | JP          4601822       B2 | 22 December 2010 |
| | | JP          4982717       B2 | 25 July 2012 |
| | | JP          5964594       B2 | 03 August 2016 |
| | | NO          20010374       L | 23 March 2001 |
| | | NO          20023080       L | 13 September 2002 |
| | | RU    2002120794    A | 10 January 2004 |
| | | RU          2257955       C2 | 10 August 2005 |
| | | US    2003-0007904    A1 | 09 January 2003 |
| | | US    2004-0188326    A1 | 30 September 2004 |
| | | US          6440895       B1 | 27 August 2002 |
| | | US          6479428       B1 | 12 November 2002 |
| | | US          6762149       B2 | 13 July 2004 |
| | | US          7498001       B2 | 03 March 2009 |
| | | WO          00-06301       A1 | 10 February 2000 |
| | | WO          01-54812       A1 | 02 August 2001 |
| | | WO          01-54812       B1 | 29 November 2001 |
| US       2020-0238256    A1 | 30 July 2020 | AU    2020-215051    A1 | 22 July 2021 |
| | | CA          3127339       A1 | 06 August 2020 |
| | | CN          113747970       A | 03 December 2021 |
| | | EA          202192110       A1 | 15 February 2022 |
| | | EP          3917665       A1 | 08 December 2021 |
| | | IL          285097       A | 30 September 2021 |
| | | JP    2022-519056    A | 18 March 2022 |
| | | KR  10-2021-0122241    A | 08 October 2021 |
| | | WO    2020-160258    A1 | 06 August 2020 |
| KR    10-2018-0127267    A | 28 November 2018 | KR  10-2021-0072101    A | 16 June 2021 |

Form PCT/ISA/210 (patent family annex) (July 2022)

**INTERNATIONAL SEARCH REPORT**
Information on patent family members

International application No.

**PCT/KR2022/011327**

| Patent document cited in search report | | | Publication date (day/month/year) | Patent family member(s) | | | Publication date (day/month/year) |
|---|---|---|---|---|---|---|---|
| | | | | WO | 2020-085875 | A1 | 30 April 2020 |
| US | 2009-0286677 | A1 | 19 November 2009 | CN | 101484241 | A | 15 July 2009 |
| | | | | CN | 101484241 | B | 04 April 2012 |
| | | | | EP | 2050497 | A1 | 22 April 2009 |
| | | | | EP | 2050497 | B1 | 13 February 2019 |
| | | | | JP | 2008-012382 | A | 24 January 2008 |
| | | | | JP | 5076377 | B2 | 21 November 2012 |
| | | | | US | 8999878 | B2 | 07 April 2015 |
| | | | | WO | 2008-004687 | A1 | 10 January 2008 |
| CN | 107930626 | B | 23 April 2021 | CN | 107930626 | A | 20 April 2018 |

Form PCT/ISA/210 (patent family annex) (July 2022)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210159456